# NEW EUROPEAN PATENT SPECIFICATION

(11) **EP 0 416 852 B2**
(45) Date of publication and mention of the opposition decision: **23.04.2003**
(45) Mention of the grant of the patent: 16.07.1997
(21) Application number: 90309633.7
(22) Date of filing: 04.09.1990
(51) Int. Cl.: B23K 26/00, B23K 26/08, B22F 7/02, B22F 3/10, B05C 19/00, C23C 26/02

(54) **Multiple material systems and assisted powder handling for selective beam sintering**
Mehrmaterialsysteme zum Sintern mit selektiver Strahlung unter Anwendung von Pulver
Multiple système matériel utilisant de la poudre, pour le frittage par rayonnement sélectif

(30) Priority: 05.09.1989 US 402693; 05.09.1989 US 402694
(43) Date of publication of application: 13.03.1991
(60) Divisional application: 96200424.8
(73) Proprietor: BOARD OF REGENTS, THE UNIVERSITY OF TEXAS SYSTEM, Austin, Texas 78701 (US)
(72) Inventor: Beaman, Joseph J., Austin, Texas 78705 (US); Deckard, Carl R., Round Rock, Texas 78681 (US); Bourell, David L., Austin, Texas 78749 (US); Marcus, Harris L., Austin, Texas 78759 (US); Barlow, Joel W., Austin, Texas 78757 (US)
(74) Representative: Smith, Norman Ian

(56) References cited:
- WO-A-88/02677
- US-A- 4 247 508
- PATENT ABSTRACTS OF JAPAN vol. 11, no. 166 (M-593)(2613) 28 May 1987, & JP-A-61 296976 ( TOYOTA MOTOR ) 27 December 1986
- Manufacture technology review; Vol. 2., 1987, 15th North American Manufacturing Research Conference Proceedings, 27-29 May, 1987, Lehigh University,Bethlehem, Pennsylvania, pages 636-640

## Description

### Field of the Invention

This invention relates to a method which uses a directed energy beam to selectively sinter a powder to produce a part. This method uses a computer aided laser apparatus which sequentially sinters plural layers of powder to build up the desired part in a layer-by-layer fashion. The present method employs a powder comprising plural powders in combination, each powder consisting of a material having a bonding temperature which may be the same or different from that of another material, and where a powder is dissociated, consisting of a material having a dissociation temperature which may be the same or differennt from that of another.

### Description of the Relevant Art

The economies associated with conventional part production methods are generally related directly to the quantity of parts to be produced and the desired material characteristics of the finished parts. For example, large scale manufacture casting and extrusion techniques are often cost effective, but these production methods are generally unacceptable for small quantities - i.e. replacement parts or prototype production. Many such conventional part production methods require expensive part specific tooling. Even powder metallurgy requires a die for shaping the powder, making powder metallurgy unattractive as a method for producing a small number of parts.

Where only a small number of parts are desired, conventional production methods involving a subtractive machining method are usually used to produce the desired part. In such subtractive methods, material is cut away from a starting block of material to produce a more complex shape. Examples of subtractive machine tool methods include: milling, drilling, grinding, lathe cutting, flame cutting, electric discharge machine, etc. While such conventional machine tool subtractive methods are usually effective in producing the desired part, they are deficient in many respects.

First, such conventional machine tool subtractive methods produce a large amount of waste material for disposal. Further, such machine tool methods usually involve a large initial expense for setting up the proper machining protocol and tools. As such, the set-up time is not only expensive, but relies a great deal on human judgment and expertise. These problems are, of course, exacerbated when only a small number of parts are to be produced.

Another difficulty associated with such conventional machining techniques involves tool wear - which not only involves the cost of replacement, but also reduces machining accuracy as the tool wears. Another limit on the accuracy and tolerance of any part produced by conventional machining techniques is the tolerance limits inherent in the particular machine tool. For example, in a conventional milling machine or lathe, the lead screws and ways are manufactured to a certain tolerance, which limits the tolerances obtainable in manufacturing a part on the machine tool. Of course, the tolerances attainable are reduced with age of the machine tool.

The final difficulty associated with such conventional machine tool subtractive processes is the difficulty or impossibility of making many part configurations. That is, conventional machining methods are usually best suited for producing symmetrical parts and parts where only the exterior part is machined. However, where a desired part is unusual in shape or has internal features, the machining becomes more difficult and quite often, the part must be divided into segments for production. In many cases, a particular part configuration is not possible because of the limitations imposed upon the tool placement on the part. Thus, the size and configuration of the cutting tool do not permit access of the tool to produce the desired configuration.

There are other machining processes which are additive, for example, plating, cladding, and some welding processes are additive in that material is added to a starting substrate. In recent years, other additive-type machining methods have been developed which use a laser beam to coat or deposit material on a starting article. Examples include U.S. Patent Nos. 4,117,302; 4,474,861; 4,300,474; and 4,323,756. These recent uses of lasers have been primarily limited to adding a coating to a previously machined article. Often such laser coating methods have been employed to achieve certain metallurgic properties obtainable only by such coating methods. Typically, in such laser coating methods the starting article is rotated and the laser directed at a fixed location with the coating material sprayed onto the article so that the laser will melt the coating onto the article.

Additionally a process for compressing a powder based material into a coherent mass prior to sintering has been suggested. An example includes United States Patent No. 4,752,352.

WO 88/02677 discloses a method according to the preamble of claim 1.

EP-A-0 221 276 describes a method of forming a high temperature composite layer as a surface treatment of a substrate, in order to improve the resistance of the product to corrosion, heat and wear. The method includes dispensing, over the substrate, a mixture of materials, such as ceramic powder of a metal carbide mixed with a metallic powder containing silicon and a metal that will form an intermetallic with silicon. A high power laser (3.g., 2kW) irradiates the powder mixture at the surface of the substrate to form the desired surface treatment.

### SUMMARY OF THE INVENTION

The problems outlined above are in large measure solved by the method of the present invention. According to the present invention there is provided a method according to claim 1 .

The present method thus includes a directed energy beam - such as a laser - and is adaptable to produce almost any three dimensional part. The method is an additive process, with the powder being dispensed into a target area where the laser selectively sinters a portion of the powder to produce a sintered layer. It is sintered at a temperature which causes viscous flow, for example, at contiguous boundaries of particles of the powder, with at least some portion of each particle remaining solid. Such sintering causes the density of the sintered portion to increase compared to the bulk density of that portion of powder before it was sintered, and a part formed by layer-wise joining of plural layers is therefore said to be autogenously densified. The method is not limited to a particular type of powder, but rather is adaptable to plastic, metal, polymer, ceramic, wax, semiconductor or amorphous powders, or composite material powders.

The method can be performed using apparatus which includes a laser or other directed energy source which is selectable for emitting a beam in a target area where the part is produced. A powder dispenser system deposits powder into the target area. A laser control mechanism operates to move the aim of the laser beam and modulates the laser to selectively sinter a layer of powder dispensed into the target area. The control mechanism operates to selectively sinter only the powder disposed within defined boundaries to produce the desired layer of the part. The control mechanism operates the laser to selectively sinter sequential layers of powder, producing a completed part comprising a plurality of layers sintered together. The defined boundaries of each layer correspond to respective cross-sectional regions of the part. Preferably, the control mechanism includes a computer - e.g. a CAD/CAM system - to determine the defined boundaries for each layer. That is, given the overall dimensions and configuration of the part, the computer determines the defined boundaries for each layer and operates the laser control mechanism in accordance with the defined boundaries. Alternatively, the computer can be initially programmed with the defined boundaries of each layer. An apparatus of this type is described in WO88/02677.

In a preferred form, the laser control mechanism includes a mechanism for directing the laser beam in the target area and a mechanism for modulating the laser beam on and off to selectively sinter the powder in the target area. In one embodiment, the directing mechanism operates to move the aim of the laser beam in a continuous raster scan of target area. The modulating mechanism turns the laser beam on and off so that the powder is sintered only when the aim of the laser beam is within the defined boundaries for the particular layer. Alternatively, the directing mechanism aims the laser beam only within the defined boundaries for the particular layer so that the laser beam can be left on continuously to sinter the powder within the defined boundaries for the particular layer.

The directing mechanism can move the laser beam in a repetitive raster scan of the target area using a pair of mirrors driven by galvanometers. The first mirror reflects the laser beam to the second mirror which reflects the beam into the target area. Shifting movement of the first mirror by its galvanometer shifts the laser beam generally in one direction in the target area. Similarly, shifting movement of the second mirror by its galvanometer shifts the laser beam in the target area in a second direction. Preferably, the mirrors are oriented relative to each other so that the first and second directions are generally perpendicular to each other. Such an arrangement allows for many different types of scanning patterns of the laser beam in the target area, including the raster scan pattern of the preferred embodiment of the present invention. include a CAD/CAM system, where the computer is given the overall dimensions and configuration of the part to be made and the computer determines the boundaries of each cross-sectional region of the part. Using the determined boundaries, the computer controls the sintering of each layer corresponding to the cross-sectional regions of the part. In an alternative embodiment, the computer is simply programmed with the boundaries of each cross-sectional region of the part.

Additionally, another embodiment of the present invention includes a powder comprising a plurality of materials where the plurality of materials have more than one dissociation temperature. By dissociation temperature, it is meant that temperature at which a molecule breaks up into its parts. In still another embodiment of the present invention, the powder comprises a plurality of materials where the plurality of materials have more than one bonding temperature. By bonding temperature, it is meant that temperature at which the powder is sintered, such temperature causing viscous flow only at contiguous boundaries of particles with at least some portion of each particle remaining solid.

In the preferred embodiments of the present invention, a powder comprises plural materials in combination, one with another, in which is a first material is coated with a second material, and optionally coated with a third and additional materials.

The invention will be described now by way of example only, with particular reference to the accompanying drawings. In the drawings:
FIGURE 1 is a schematic representation of the apparatus which can be used to carry out the method of the present invention;
FIGURE 2 is a schematic representation showing a portion of the layered build up of a part produced in accordance with the present invention, and illustrating the raster scan pattern of the laser beam in the target area:
FIGURE 3 is a block diagram depicting the interface hardware between the computer, laser and galvanometers;
FIGURE 4 is a perspective view of an example part produced in accordance with the present invention;
FIGURE 5 is a sectional view with parts broken away and in phantom, of the part illustrated in FIGURE 4;
FIGURE 6 is a flow chart of the data metering program;
FIGURE 7 is a sectional view taken along line -7 of FIGURE 4;
FIGURE 8 illustrates in diagram form the correlation between a single sweep of the laser across the layer of FIGURE 7 and the control signals;
FIGURE 9 illustrates a blend of materials in a powder;
FIGURE 10 illustrates materials coated, one by the other, in a powder;
FIGURE 11 illustrates a portion of a sintering cycle on a blend of materials as presently understood;
FIGURE 12 illustrates two materials intermixed as sequential layers deposited prior to sintering;
FIGURE 13 is a schematic, vertical, sectional view of the powder dispensing device distributing powder in a layer on the part being produced; and
FIGURE 14 is a schematic, perspective view of the powder dispensing device;

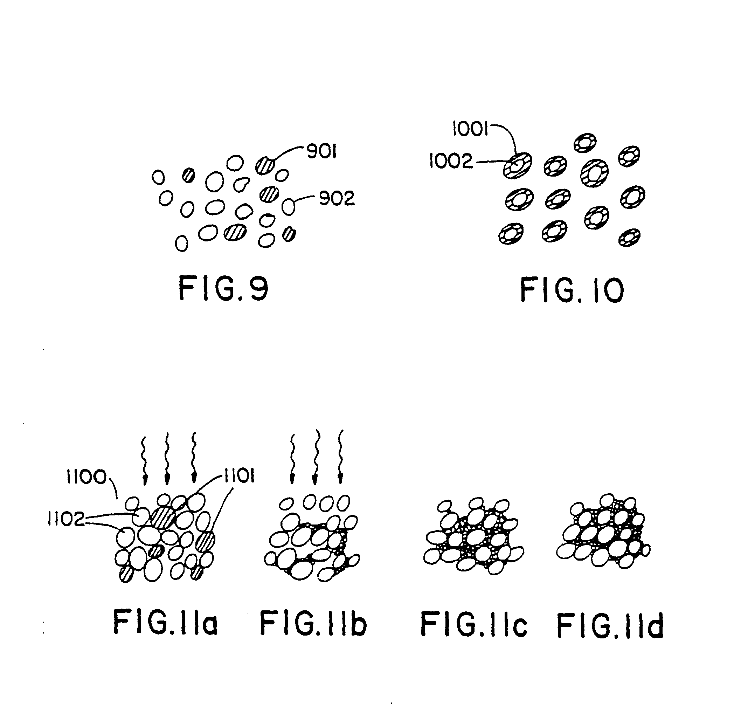

Figures 9, 11, and 12 do not illustrate embodiments of the invention.

### DESCRIPTION OF THE PREFERRED EMBOD MENTS

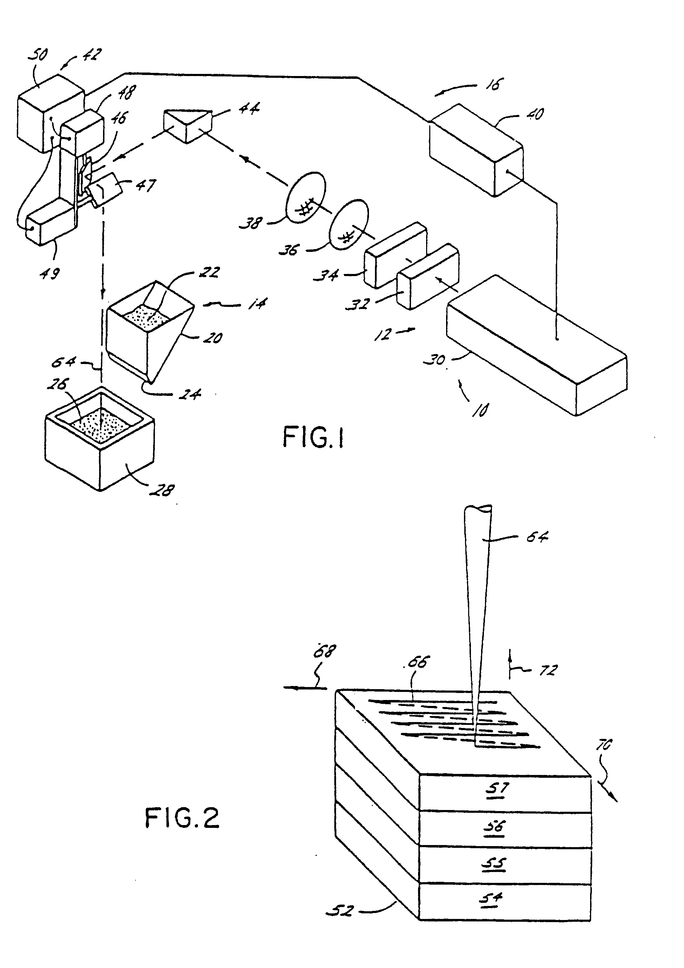

Turning now to the drawings, FIGURE 1 broadly illustrates the apparatus 10 for use in the present invention. Broadly speaking, the apparatus 10 includes a laser 12, powder dispenser 14, and laser control means 16. In more detail, the powder dispenser 14 includes a hopper 20 for receiving the powder 22 and having an outlet 24. The outlet 24 is oriented for dispensing a combination of materials in powder form to a target area 26, which in FIGURE 1 is generally defined by the confinement structure 28. Of course, many alternatives exist for dispensing the powder 22.

The components of the laser 12 are shown somewhat schematically in FIGURE 1 and include a laser head 30, a safety shutter 32, and a front mirror assembly 34. The type of laser used is dependent upon many factors, and in particular upon the type of powder 22 that is to be sintered. In the embodiment of FIGURE 1, a Nd:YAG laser (Lasermetrics 9500Q) was used which can operate in a continuous or pulsed mode with a hundred-watt maximum outlet power in the continuous mode. The laser beam output of the laser 12 has a wavelength of approximately 1060 nm, which is near infrared. The laser 12 illustrated in FIGURE 1 includes an internal pulse rate generator with a selectable range of about one kiloHertz to forty kiloHertz, and an approx-imately six nanosecond pulse duration. In either the pulsed or continuous mode, the laser 12 can be modulated on or off to selectively produce a laser beam which travels generally along the path shown by the arrows in FIGURE 1.

To focus the laser beam, a diverging lens 36 and converging lens 38 are disposed along the path of travel of the laser beam as shown in FIGURE 1. Using just the converging lens 38, the location of the true focal point is not easily controlled by varying the distance between the converging lens 38 and the laser 12. The diverging lens 36 placed between the laser 12 and converging lens 38 creates a virtual focal point between the diverging lens 36 and the laser 12. Varying the distance between the converging lens 38 and the virtual focal point, allows control of the true focal point along the laser beam path of travel on the side of the converging lens 38 remote from the laser 12. In recent years there have been many advances in the field of optics, and it is recognized that many alternatives are available to efficiently focus the laser beam at a known location.

In more detail, the laser control means 16 includes computer 40 and scanning system 42. In a preferred embodiment, the computer 40 includes a microprocessor for controlling the laser 12 and a CAD/CAM system for generating the data. In the embodiment illustrated in FIGURE 1, a personal computer is used (Commodore 64) whose primary attributes include an accessible interface port and a flag line which generates a non-maskable interrupt.

As shown in FIGURE 1, the scanning system 42 includes a prism 44 for redirecting the path of travel of the laser beam. Of course, physical layout of the apparatus 10 is the primary consideration in determining whether a prism 44, or a plurality of prisms 44, are needed to manipulate the path of travel of the laser beam. The scanning system 42 also includes a pair of mirrors 46, 47 driven by respective galvanometers 48, 49. The galvanometers 48, 49 coupled to their respective mirrors 46, 47 to selectively orientate the mirrors 46, 47. The galvanometers 46, 47 are mounted perpendicular to each other such that the mirrors 46, 47 are mounted nominally at a right angle to each other. A function generator driver 50 controls the movement of the galvanometer 48 (galvanometer 49 is slaved to the movement of galvanometer 48) so that the aim of the laser beam (represented by the arrows in FIGURE 1) can be controlled in the target area 26. The driver 50 is operatively coupled to the computer 40 as shown in FIGURE 1. It will be appreciated that alternative scanning methods are available for use as the scanning system 42, including acusto-optic scanners, rotating polygon mirrors, and resonant mirror scanners.

Turning to FIGURE 2 of the drawing, a portion of a part 52 is schematically illustrated and shows four layers 54-57. The aim of the laser beam, labeled 64 in FIGURE 2, is directed in a raster scan pattern as at 66. As used herein, "aim" is used in its ordinary sense indicating direction, but does not imply the modulation state of the laser 12. For convenience, the axis 68 is considered the fast scan axis, while the axis 70 is referred to as the slow scan axis. Axis 72 is the direction of part build-up.

FIGURES 9 and 10 schematically illustrate a powder comprising first and second materials from which a part may be made.

FIGURE 9 illustrates a blend of first material 901 and second material 902. The materials are combined in a blend through conventional blending processes. FIGURE 10 illustrates material 1002 coated with material 1001. Material 1002 is coated using conventional coating processes.

As will be further apparent to one skilled in the art, coated materials, as shown in FIGURE 10, may be blended to produce a desired mix of materials.

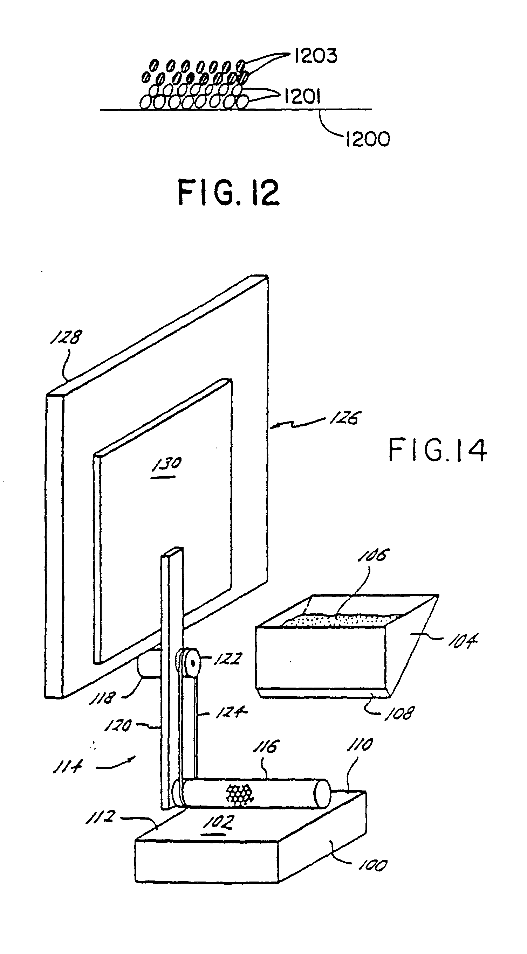

Turning to FIGURE 11, a portion of a sintering cycle, as presently understood, is illustrated. FIGURE 11a illustrates a blend of materials prior to the application of energy able to produce sintering. Preferably, the materials comprising powder mass 1100 have more than one bonding or dissociation temperature. FIGURE 11b illustrates powder 1100 during application of energy sufficient to promote sintering. FIGURE 11b illustrates material 1101 having a lower bonding or dissociation temperature than material 1102. In a preferred embodiment, the low temperature phase material 1101 infiltrates powder mass 1100 in the area surrounding each particle of material 1101. In a powder mixture of polymers of different materials, such infiltration is evidenced by chain diffusion and entanglement of chains of one polymer with those of the other. In a mixture of first and second metals, present as a mass of porous powder of predetermined porosity, such infiltration is evidenced by interdiffusion of one metal into the surface of the other. Additional powder components could also be added to the blend to promote infiltration. Similarly a gas phase can be used to promote infiltration and the sintering process. The gas phase may be either inert or active, preferably to either displace an undesired gas or introduce a desired gas. FIGURE 11c illustrates a potential mechanism through which effects, including but not limited to, capillarity effects, allow material 1101 to infiltrate the powder mass 1100. FIGURE 11d shows the part following sintering in the present invention.

Because a material having a bonding or dissociation temperature higher than the temperature to be obtained during the sintering process may be selected, the higher bonding or dissociation temperature material need not sinter but may retain its original structure. In particular, for crystalline material this enables control of epitaxial growth in the selective beam sintering process of the present invention. For example, if the higher bonding or dissociation temperature material is positioned in a particular structure that may, preferably, result in epitaxial growth from the preceding layer, only bonding or dissociating the lower bonding or dissociation temperature material enables the higher temperature material to retain its structure.

The choice of materials selected for the powder allows for a broad range of resulting sintered material. For example, a conducting material is preferably coated with an insulating polymer material to produce a powder. The powder is then distributed in the target area. The material is sintered and the insulator may be removed later through a conventional process. including but not limited to a chemical method, resulting in a conductive, sintered product.

By way of further illustration, extremely hard materials may be produced using the present invention. For example, tungsten carbide/cobalt tools which, because of their extreme hardness are difficult to form or sharpen may be produced by coating tungsten carbide material with cobalt to produce a powder. During sintering. the cobalt preferably melts under the applied energy beam causing local infiltration of the tungsten carbide. The part that is manufactured is ready to be put into service preferably after a secondary process including, but not limited to, annealing.

By way of further illustration, copper and tin may be combined in a powder. Tin, having a lower melting temperature than copper, will melt and infiltrate the copper during sintering.

Secondary processing may also be applied to parts produced using the present invention. For example, where tin is allowed to melt and infiltrate copper during sintering, post process annealing will dissolve the tin into the copper in the solid state creating bronze with minimal volume change or distortion.

By way of further illustration, metal, including but not limited to, iron or steel, may be coated with poly(methyl methacrylate) (PMMA) polymer to form a powder. Sintering enables the PMMA to flow and bind the metal. Post process annealing will dissociate the PMMA and sinter the metal thus producing a final part.

Ceramic materials may be processed in this fashion as well. In another example, aluminum silicate, silica, or other ceramic powder can be coated with a polymer by a variety of methods, including spray drying and solvent coating. A surface active agent may be used to pretreat the ceramic powder prior to coating. This agent may be based on organosilane chemistry or other chemistries known to promote the wetability of the ceramic by the polymer and the adhesion of ceramic to polymer. Any polymer, either thermoplastic or thermoset, which can be coated on the ceramic, can be used as a binder. Typical materials include PMMA, polystyrene, various epoxy formulations, and phenolics.

Any combination of materials, including but not limited to, metals, ceramics and polymers enables production of parts in accordance with the present invention wherein at least one material in the powder has a low bonding or dissociation temperature relative to the other materials in the powder.

In another preferred embodiment of the present invention, the temperature of the powder mass may be increased using conventional heating means allowing the energy beam to merely supply a small increase of energy to produce bonding or dissociation of one of the elemental materials of the powder.

Materials comprising the powder may be chosen for each material's selective absorption of energy from a laser beam (represented by the arrows in FIGURES 11a and 11b). In the preferred embodiment shown in FIGURE 11, material 1101 may be chosen to absorb the wavelength of the applied beam energy represented by the arrows while elemental material 1102 absorbs less energy thereby enabling elemental material 1101 to bond or dissociate prior to the bonding or dissociation of elemental material 1102. This absorption of energy can be achieved by either material or laser beam wavelength selection, or both, in a plurality of combinations.

Turning to FIGURE 12, a material 1201 is preferably deposited on surface 1200 and second material 1203 is then deposited on material 1201 prior to sintering. Materials 1201 and 1203 preferably have different bonding or dissociation temperatures.

Turning to FIGURES 13 and 14, an alternative form of powder dispenser 20 is illustrated. Broadly speaking, a support defines a target area 102 which is preferably electrically charged and where the aim of the beam 64 is directed (see FIG. 1). A hopper 104 dispenses the powder 106 through opening 108 into the target area 102. A metering roller (not shown) is disposed in the opening 108, such that when rotated the metering roller deposits a metered mound of powder in a line at end 110 of the target area 102.

A leveling mechanism 114 spreads the mound of powder 106 from end 110 to the other end 112 of the target area. The leveling mechanism 114 includes a cylindrical drum 116 having an electrical charge of opposite polarity to said target area 102. It is believed that the attractive forces between the charged layer of the powder 164 and the oppositely charged target area 102 create pressure on the powder layer 164 producing a high bulk density of powder 106 including powder in layer 164. A motor 118 mounted on bar 120 is coupled to the drum 116 via pulley 122 and belt 124 to rotate the drum.

The leveling mechanism 114 also includes a mechanism 126 for moving the drum 116 between end 110 and end 112 of the target area. The mechanism 126 comprises an X/Y table for moving the bar 120 horizontally and vertically. That is, table 128 is fixed while plate 130 is selectively moveable relative to table 128.

### Operation

A fundamental concept of the present invention is the build up of a part in a layer-by-layer manner. That is, a part is considered a plurality of discrete cross-sectional regions which cumulatively comprise the three-dimensional configuration of the part. Each discrete cross-sectional region has defined two-dimensional boundaries - of course, each region may have unique boundaries.

In the method, a first portion of powder 22 is deposited in the target area 26 and selectively sintered by the laser beam 64 to produce a first sintered layer 54 (FIGURE 2). The first sintered layer 54 corresponds to a first cross-sectional region of the desired part. The laser beam selectively sinters only the deposited powder 22 within the confines of the defined boundaries.

There are, of course, alternative methods of selectively sintering the powder 22. One method is for the aim of the beam to be directed in a "vector" fashion - that is, the beam would actually trace the outline and interior of each cross-sectional region of the desired part. Alternatively, the aim of the beam 64 is scanned in a repetitive pattern and the laser 12 modulated. In FIGURE 2, a raster scan pattern 66 is used and is advantageous over the vector mode primarily in its simplicity of implementation. Another possibility is to combine the vector and raster scan methods so that the desired boundaries of the layer are traced in a vector mode and the interior irradiated in a raster scan mode. There are, of course, trade-offs associated with the method chosen. For example, the raster mode has a disadvantage when compared to the vector mode in that arcs and lines which are not parallel to the axes 68, 70 of the raster pattern 66 of the laser beam 64 are only approximated. Thus, in some cases resolution of the part can be degraded when produced in the raster pattern mode. However, the raster mode is advantageous over the vector mode in the simplicity of implementation.

Turning to FIGURE 1, the aim of the laser beam 64 is scanned in the target area 26 in a continuous raster pattern. Broadly speaking, the driver 50 controls galvanometers 48, 49 to made the raster pattern 66 (see FIGURE 2). Shifting movement of the mirror 46 controls movement of the aim of the laser beam 64 in the fast scan axis 68 (FIGURE 2), while movement of the mirror 47 controls movement of the aim of the laser beam 64 in the slow scan access 70.

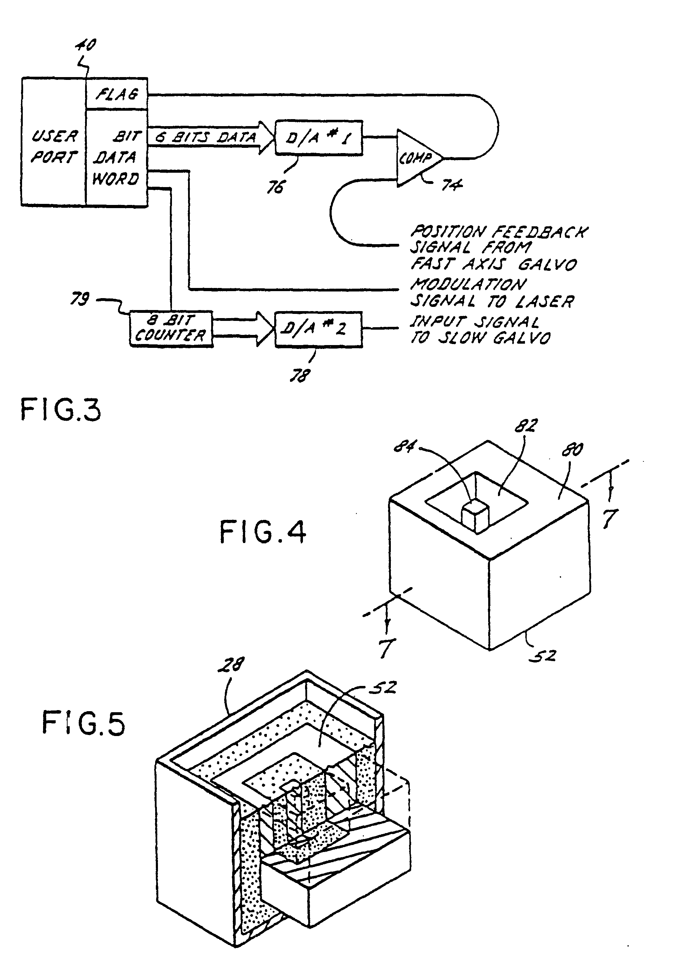

The present position of the aim of the beam 64 is fed back through the driver 50 to the computer 40 (see FIGURE 3). As described below, in more detail, the computer 40 possesses information relating to the desired cross-sectional region of the part then being produced. That is, a portion of loose powder 22 is dispensed into the target area 26 and the aim of the laser beam 64 moved in its continuous raster pattern. The computer 40 modulates the laser 12 to selectively produce a laser beam at desired intervals in the raster pattern 66. In this fashion, the directed beam of the laser 12 selectively sinters the powder 22 in the target area 26 to produce the desired sintered layer with the defined boundaries of the desired cross-sectional region. This process is repeated layer-by-layer with the individual layers sintered together to produce a cohesive part - e.g. part 52 of FIGURE 2.

In operation, the wavelength of laser 12 may be varied to produce higher absorptivity of energy by selected materials in the powder relative to other materials in powder 22. In operation coated powders are preferably selected to produce sintered product with characteristics including but not limited to, close dimensional tolerances, structural integrity and required mechanical behavior.

Turning now to FIGURES 13 and 14, the dispensing mechanism 114 has been found to provide a controlled level layer of powder in the target area 102 without disturbing the part being produced. A metered amount of powder 106 is deposited at end 110 of the target area 102. The electrically charged drum 116 is spaced away from end 110 when the powder 106 is dispensed. In the system illustrated in FIGURE 14, the plate 130 and bar 120 (and attached mechanisms) are raised vertically after the powder is dispensed in the mound. Travel of the plate 130 towards the hopper 104 brings the drum 116 into position adjacent the mound of powder lined up along end 110. The drum 116 is lowered to contact the mound of powder and brought horizontally across the target area 102 to spread the mound of powder in a smooth even layer. Of course, the precise location of plate 130 relative to table 128 can be controlled, so that the spacing between drum 116 and target area 102 can be precisely controlled to yield the desired thickness to the layer of powder. Preferably, the spacing between the drum 116 and target area 102 is constant to give a parallel motion, but other spacing options are available.

As the drum 116 is moved horizontally across the target area 102 from end 110 to end 112, motor 118 is activated to counter-rotate the drum 116. As shown in FIGURE 13, "counter-rotation" means the drum 116 is rotated in the direction R counter to the direction of movement M of the drum 116 horizontally across the target area 102.

In more detail (FIG. 13), the drum 116 is rotated at high speed in the counter-clockwise direction as it contacts the mound of powder 106 along the trailing edge 160. The mechanical action of the drum on the powder ejects the powder to the direction of movement M so that the ejected particles fall in front of the drum. As illustrated in FIGURE 13, a smooth, level layer of powder is left behind the drum 116 (between drum 116 and end 110) as depicted at 164.

FIGURE 13 also illustrates schematically that the powder 106 can be distributed over the target area without disturbing previously sintered powder 166 or unsintered powder 168. That is, the drum 116 is moved across the target area 102 without transmitting shear stress to the previously built up layers and without disturbing the article as it is being produced. The absence of such sheer stress permits a smooth layer of powder 106 to be distributed on the fragile substrate in the target area, which includes both the sintered particles 166 and the unsintered particles 168.

### Interface and Software

The interface hardware operatively interconnects the computer 40 with the laser 12 and galvanometers 47, 48. The output port of the computer 40 (see FIGURES 1 and 3) is directly connected to the laser 12 to selectively modulate the laser 12. When operated in the pulsed mode, the laser 12 is easily controlled by digital inputs to the pulsed gate input of the laser. Galvanometer 48 is driven by the function generator driver 50 to drive the beam in the fast scan axis 68 independent of any control signals from the computer 40. However, a position feedback signal from the galvanometer 48 is fed to a voltage comparator 74 as shown in FIGURE 3. The other input to the comparator is connected to the digital-to-analog convertor 76 which is indicative of the least significant six bits (bits 0-5) of the user port of the computer 40. As shown in FIGURE 3, the output of the voltage comparator 74 is connected to the flag line on the user port of the computer 40. When the voltage comparator determines that the feedback signal from the galvanometer 48 crosses the signal from the digital-to-analog convertor 76, the flag line goes low causing a nonmaskable interrupt. As discussed below, the non-maskable interrupt causes the next byte of data to put out on the user port of a computer 40.

Finally, as shown in FIGURE 3, the galvanometer 49 driving the aim of the laser beam 64 in the slow scan axis 70, is controlled by a second digital to analog convertor 78. The digital-to-analog convertor 78 is driven by a counter 79 which increments with each sweep of the aim of the beam 64 in the fast scan axis 68. The eight byte counter is designed to overflow after 256 scans in the fast scan axis 68 to start a new cycle or raster scan pattern 66.

Preferably, the control information (i.e. defined boundaries of the cross-sectional regions) data for each raster pattern 66 would be determined by a CAD system given the overall dimensions and configuration of the part to be produced. Whether programmed or derived, the control information data for each raster pattern 66 is stored in the computer memory as a series of eight bit words. The data format represents a pattern of "on" and "off" regions of the laser 12, versus distance along the raster pattern 66 traveled by the aim of the beam 64. The data is stored in a "toggle-point" format where the data represents the distance along each raster scan pattern 66 where the laser is modulated (i.e. turned from on to off or from off to on). Although a "bit map" format might be used, the toggle point format has been found more efficient for the production of high resolution parts.

For each eight bit word, the least significant six bits (bits 0-5) represent the location of the next toggle point -i.e. the next location for modulation of the laser 12. The next bit (bit 6) represents whether the laser is on or off immediately before the toggle point identified in the least significant six bits. The most significant bit (MSB or bit 7) is used for looping and for controlling the slow scan axis 70 of the aim of the beam 64. Because the Commodore 64 had limited memory, looping was required - it being understood that a computer 40 with more memory would not require looping.

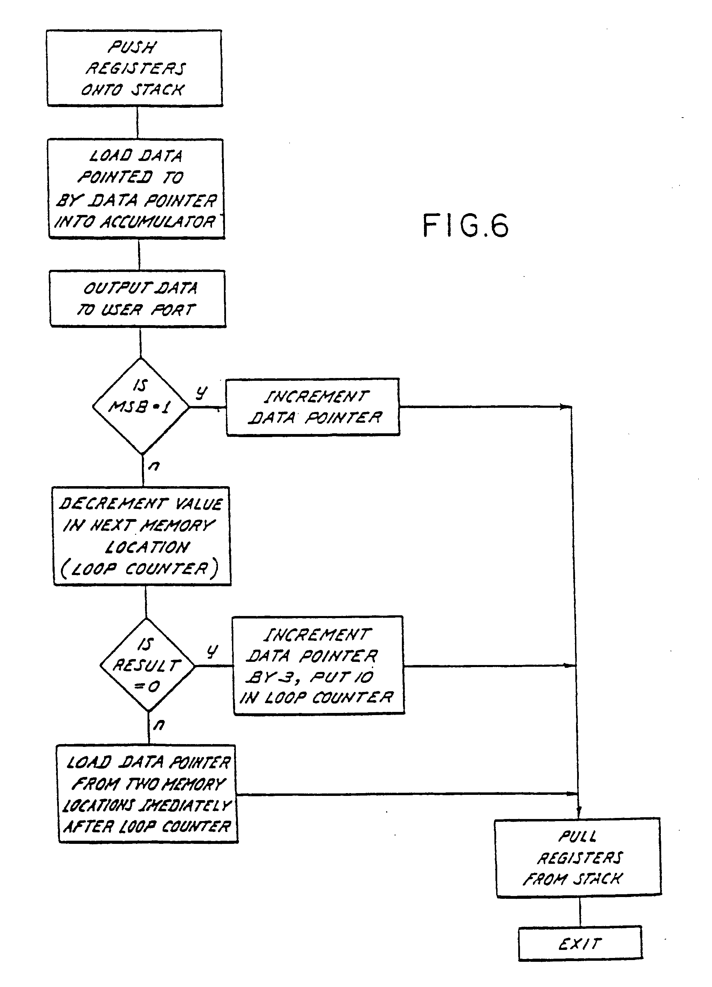

FIGURE 6 represents the flow chart for the data metering program. The data metering program is run whenever the flagline goes low causing a non-maskable interrupt (see FIGURE 3). The interrupt causes the microprocessor of the computer 40 to retrieve a two byte interrupt vector which points to the location in memory where program control is transferred at interrupt. As shown in FIGURE 6, the data metering program first pushes the registers onto the stack and then loads the next byte of data into the accumulator. The data word is also output to the user port with the sixth bit used to modulate the laser 12 (FIGURE 3).

As shown in FIGURE 6, the most significant bit (MSB or bit 7) of the data word in the accumulator is examined. If the value of the most significant bit is one, that means the end of the loop has not been reached; therefore the data pointer is incremented, registers are restored from the stack, and the data metering program is exited, returning control to the microprocessor at the location of interrupt. If the most significant bit in the accumulator is zero, the data word is the last word in the loop. If the data word is the last word in the loop, the next bit in memory is a loop counter and the following two bytes are a vector pointing to the top of the loop. As can be seen from FIGURE 6, if the most significant bit equals zero (end of the loop) the loop counter (next bit) is decremented and analyzed. If the loop counter is still greater than zero, the data pointer assumes the value from the next two memory bytes after the loop counter, registers are pulled from the stack and program control returns to the location of interrupt. On the other hand, if loop counter is zero, the data pointer is incremented by three and the loop counter is reset to ten before exiting the program. It can be appreciated that the need for such looping is absolved if the memory size of the computer 40 is adequate.

### Example

In FIGURES 4 and 5, an example part 52 is illustrated. As can be seen from the drawing, the example part 52 assumes an unusual shape in that it is not symmetrical and would be difficult to fabricate using conventional machining methods. For reference purposes, the part 52 includes an outer base structure 80 having an interior cavity 82 and a pillar 84 disposed within the cavity 82 (see FIGURE 4). FIGURE 5 shows the part 52 within the confinement structure 28 defining the target area 26 illustrated in FIGURE 1. As shown in FIGURE 5, some of the powder 22 is loose, while the remainder of the powder is selectively sintered to comprise the structure of the part 52. FIGURE 5 is shown in vertical section with parts broken away and outlined in phantom to show the sintered cohesive portions of the part 52.

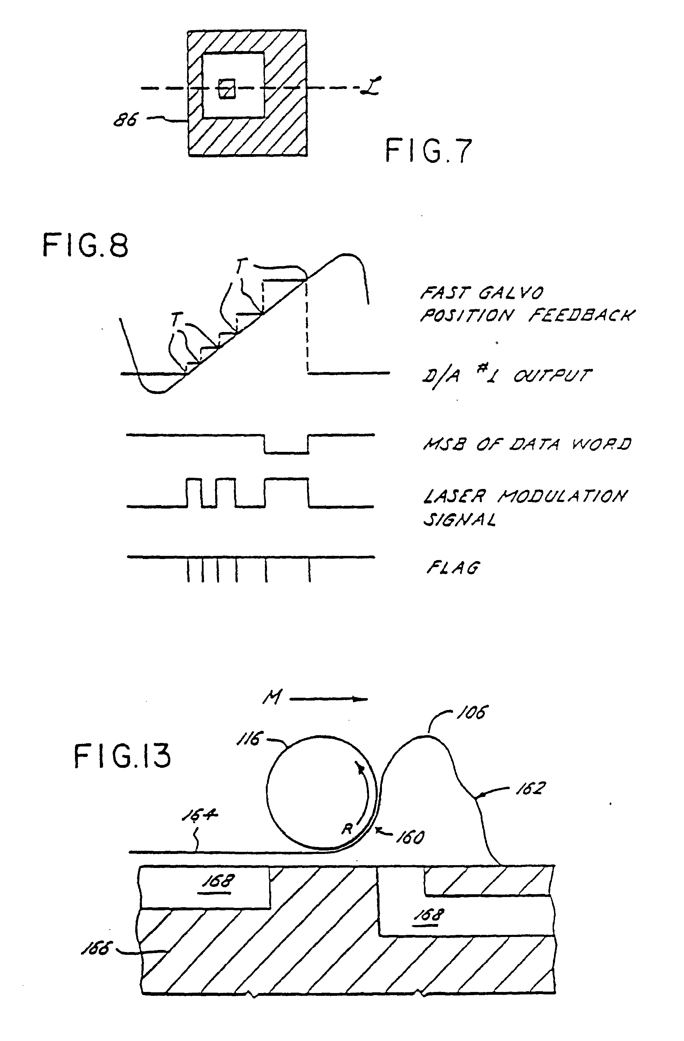

FIGURE 7 shows a horizontal cross-sectional region, taken along line 7-7 of FIGURE 4. FIGURE 7 represents a discrete layer 86 associated with the cross-sectional region of the part being produced. As such, the sintered layer 86 of FIGURE 7 is a product of a single raster pattern 66 as illustrated in FIGURE 2.

For reference purposes, a sweep line through the sintered layer 86 has been labeled "L." FIGURE 8 illustrates the software and hardware interface operation during the sweep L The top graph shows the position of feedback signal from the fast axis galva 48 and the output signal of the first digital to analog convertor 76 (compare FIGURE 3). The voltage comparator 74 generates an output signal to the flag line of the computer 40 every time the feedback signal and first D/A output signal cross.

In the top graph of FIGURE 8, these points are labeled T to represent toggle points. As can be seen from the bottom graph of FIGURE 8, the flag line generates a nonmaskable interrupt corresponding to each toggle point T. The sixth bit of each data word is analyzed and the current state of the laser 12 will reflect the value. The penultimate graph of FIGURE 8 shows the laser modulation signal for the sweep line L of FIGURE 7. The second graph of FIGURE 8 shows that a high-going edge in the most significant bit will be encountered at the end of each sweep of the aim of the laser beam 64 in the fast scan axis 68. As shown in FIGURES 3 and 6, the counter 79 increments on a high going edge, and outputs a signal to the second digital-analog convertor 78 to drive the slow axis galvanometer 49.

As can be seen from the example illustrated in the drawing, parts of complex shape can be produced with relative ease. Those skilled in the art will appreciate that the part 52 illustrated in FIGURE 4 would be difficult to produce using conventional machining methods. In particular, machine tool access would make the fabrication of cavity 82 and pillar 84 difficult, if not impossible, to produce if the part 52 were of a relatively small size.

In addition to avoiding the access problem, it will be appreciated that the production accuracy is not dependent upon machine tool wear and the accuracy of mechanical components found in conventional machine tools. That is, the accuracy and tolerances of the parts produced by the method and apparatus of the present invention are primarily a function of the quality of the electronics, the optics, and the implementing software. Of course, heat transfer and material considerations do affect the tolerances obtainable.

Those skilled in the art will appreciate that conventional machining techniques require considerable human intervention and judgment. For example, a conventional machining process, such as milling, would require creativity to make such decisions as tool selection, part segmenting, sequence of cuts, etc. Such decisions would even be more important when producing a control tape for a tape control milling machine. On the other hand, the apparatus of the present invention only requires the data relating to each cross-sectional region of the part being produced. While such data can be simply programmed into the computer 40, preferably, the computer 40 includes a CAD/CAM system. That is, the CAD/CAM portion of the computer 40 is given the overall dimensions and configurations of the desired part to be produced and the computer 40 determines the boundaries for each discrete cross-sectional region of the part. Thus, a vast inventory of part information can be stored and fed to the computer 40 on a selectable basis. The apparatus 10 produces a selected part without set-up time, part specific tooling, or human intervention. Even the complex and expensive dies associated with powder metallurgy and conventional casting techniques are avoided.

While large quantity production runs and certain part material characteristics might be most advantageously made using conventional fabrication techniques, the method and apparatus 10 of the present invention is useful in many contexts. In particular, prototype models and casting patterns are easily and inexpensively produced. For example, casting patterns are easily made for use in sand casting, lost wax casting, or other forming techniques. Further, where desired quantities are very small, such as with obsolete replacement parts, production of such replacement parts using the apparatus 10 of the present invention has many advantages. Finally, the use of the apparatus 10 may be useful where size of production facilities is a major constraint, such as on-ship or in outerspace.

## Claims

1. A method of producing a part comprising the steps of depositing a layer of powder onto a target surface (26, 102), irradiating a selected portion of the powder corresponding to a cross-sectional region of the part to be produced with a directed energy beam (64) in order to sinter the selected portion, repeating the depositing and irradiating steps for a plurality of layers (54, 55, 56, 57) so that bonded portions of adjacent layers bond to one another to form a mass (52), and removing unbonded portions of the powder to yield the mass (52), **characterised in that** the powder comprises particles of a first material (1002) coated with a second material (1001), said second material (1001) having a lower softening temperature than said first material (1002), said irradiating step results in the second material (1001) in the selected portion of the powder bonding particles of the first material (1002) at the irradiated locations, and wherein, after said removing step, the yielded mass (52) is annealed.

2. A method according to claim 1, further **characterised by**:
during said irradiating step, exposing the powder to a gas phase to promote infiltration of the second material (1001) within particles of the first material (1002).

3. A method according to claim 1, wherein the directed energy beam (64) is at a selected wavelength;
and wherein said second material (1001) absorbs energy at the selected wavelength to a greater degree than said first material (1002).

4. A method according to claim 1, further **characterized by**: increasing the temperature of the powder at the target surface (26, 102) so that the irradiating step supplies a relatively small increase of energy sufficient for the second material (1001) in the selected portion of the powder to bond particles of said first material (1002) at the irradiated location.

5. A method according to claim 1, further **characterized in that** said annealing step drives off said second material (1001) and fuses particles of said first material (1002) to one another.

6. A method according to claim 1, further **characterized in that** said annealing step forms an alloy of the first and second materials (1001, 1002).

7. A method according to claim 1, wherein said first material (1002) is electrically conductive.

8. A method according to claim 7, wherein said second material (1001) is an electrically insulating polymer.

9. A method according to claim 1, wherein said second material (1001) comprises a polymer.

10. A method according to claim 1, wherein said second material (1001) is selected from the group consisting of methacrylic acid derivatives, polystyrene, epoxy, and phenolics.

11. A method according to claim 1, wherein the second material (1001) is a thermose polymer.

12. A method according to claim 1, wherein the second material (1001) is a thermoplastic polymer.

## Patentansprüche

1. Verfahren zum Herstellen eines Teils mit den Schritten: Auftragen einer Pulverschicht auf eine Zielfläche (26, 102), Bestrahlen eines ausgewählten Teils des Pulvers, der einem Querschnittsbereich des herzustellenden Teils entspricht, mit einem gerichteten Energiestrahl (64), um den ausgewählten Teil zu sintern, Wiederholen der Schritte des Auftragens und Bestrahlens für eine Vielzahl von Schichten (54, 55, 56, 57), so daß gebundene Abschnitte von benachbarten Schichten sich aneinander binden, um eine Masse (52) zu bilden, und Entfernen von ungebundenen Teilen des Pulvers, um die Masse (52) zu erhalten, **dadurch gekennzeichnet, daß** das Pulver Teilchen aus einem ersten Material (1002) aufweist, das mit einem zweiten Material (1001) beschichtet ist, wobei das zweite Material (1001) eine niedrigere Erweichungstemperatur als das erste Material (1002), hat, wobei der Schritt des Bestrahlens dazu führt, daß das zweite Material (1001) in dem ausgewählten Teil des Pulvers Teilchen des ersten Materials (1002) an den bestrahlten Stellen bindet, und wobei die erhaltene Masse (52) nach dem Schritt des Entfernens geglüht wird.

2. Verfahren nach Anspruch 1, weiterhin **dadurch gekennzeichnet, daß**:
das Pulver während des Schrittes des Bestrahlens einer Gasphase ausgesetzt wird, um das Eindringen des zweiten Materials (1001) in Teilchen des ersten Materials (1002) zu begünstigen.

3. Verfahren nach Anspruch 1, bei dem der gerichtete Energiestrahl (64) eine ausgewählte Wellenlänge hat;
und bei dem das zweite Material (1001) die Energie mit der ausgewählten Wellenlänge in einem größeren Ausmaß absorbiert als das erste Material (1002).

4. Verfahren nach Anspruch 1, weiterhin **dadurch gekennzeichnet, daß** die Temperatur des Pulvers an der Zielfläche (26, 102) erhöht wird, so daß der Schritt des Bestrahlens eine relativ kleine Zunahme der Energie bewirkt, die für das zweite Material (1001) im ausgewählten Teil des Pulvers ausreichend ist, um Teilchen des ersten Materials (1002) an der bestrahlten Stelle zu binden.

5. Verfahren nach Anspruch 1, weiterhin **dadurch gekennzeichnet, daß** der Schritt des Glühens das zweite Material (1001) vertreibt und Teilchen des ersten Materials (1002) miteinander verschmelzt.

6. Verfahren nach Anspruch 1, weiterhin **dadurch gekennzeichnet, daß** der Schritt des Glühens eine Legierung aus dem ersten und zweiten Material (1001, 1002) bildet.

7. Verfahren nach Anspruch 1, bei dem das erste Material (1002) elektrisch leitfähig ist.

8. Verfahren nach Anspruch 7, bei dem das zweite Material (1001) ein elektrisch isolierendes Polymer ist.

9. Verfahren nach Anspruch 1, bei dem das zweite Material (1001) ein Polymer aufweist.

10. Verfahren nach Anspruch 1, bei dem das zweite Material (1001) aus der Gruppe ausgewählt ist, die aus Methacrylsäurederivaten, Polystyrol, Epoxidharz und Phenolharzen besteht.

11. Verfahren nach Anspruch 1, bei dem das zweite Material (1001) ein duroplastisches Polymer ist.

12. Verfahren nach Anspruch 1, bei dem das zweite Material (1001) ein thermoplastisches Polymer ist.

## Revendications

1. Procédé pour produire une pièce comprenant les étapes consistant à déposer une couche de poudre sur une surface cible (26,102), à irradier une partie choisie de la poudre correspondant à une région de section transversale de la pièce devant être produite avec un faisceau d'énergie dirigé (64) pour fritter la partie choisie, à répéter les étapes de dépôt et d'irradiation pour une pluralité de couches (54, 55, 56, 57) afin que les parties reliées de couches adjacentes se relient les unes aux autres pour former une masse (52) et à éliminer les parties non reliées de la poudre pour obtenir la masse (52), **caractérisé en ce que** la poudre comprend des particules d'un premier matériau (1002) revêtu d'un deuxième matériau (1001), ledit deuxième matériau (1001) ayant une température de ramollissement inférieure à celle dudit premier matériau (1002), ladite étape d'irradiation entraînant dans le deuxième matériau (1001) dans la partie choisie de la poudre, la liaison de particules du premier matériau (1002) aux emplacements irradiés et, dans lequel, après ladite étape d'élimination, la masse obtenue (52) est recuite.

2. Procédé selon la revendication 1, **caractérisé en outre en ce que** pendant ladite étape d'irradiation, l'on expose la poudre à une phase gazeuse pour favoriser l'infiltration du deuxième matériau (1001) dans les particules du premier matériau (1002).

3. Procédé selon la revendication 1, dans lequel la faisceau d'énergie dirigé (64) est à une longueur d'onde choisie ;
et dans lequel ledit deuxième matériau (1001) absorbe de l'énergie à la longueur d'onde choisie selon un degré supérieur à celui dudit premier matériau (1002).

4. Procédé selon la revendication 1, **caractérisé en outre par** l'augmentation de la température de la poudre sur la surface cible (26, 102) afin que l'étape d'irradiation procure une augmentation relativement faible d'énergie suffisante pour le deuxième matériau (1001) dans la partie choisie de la poudre pour relier les particules dudit premier matériau (1002) à l'emplacement irradié.

5. Procédé selon la revendication 1, **caractérisé, en outre, en ce que** ladite étape de recuit chasse ledit deuxième matériau (1001) et fond les particules dudit premier matériau (1002) les unes avec les autres.

6. Procédé selon la revendication 1, **caractérisé en outre en ce que** ladite étape de recuit forme un alliage du premier et du deuxième matériau (1001, 1002).

7. Procédé selon la revendication 1, dans lequel ledit premier matériau (1002) est conducteur de l'électricité.

8. Procédé selon la revendication 7, dans lequel ledit deuxième matériau (1001) est un polymère isolant vis-à-vis de l'électricité.

9. Procédé selon la revendication 1, dans lequel ledit deuxième matériau (1001) comprend un polymère.

10. Procédé selon la revendication 1, dans lequel ledit deuxième matériau (1001) est choisi parmi le groupe comprenant les dérivés d'acide méthacrylique, le polystyrène, les époxy et les phénoliques.

11. Procédé selon la revendication 1, dans lequel le deuxième matériau (1001) est un polymère thermodurcissable.

12. Procédé selon la revendication 1, dans lequel le deuxième matériau (1001) est un polymère thermoplastique.
